(19) **Europäisches Patentamt**
**European Patent Office**
**Office européen des brevets**

(11) **EP 4 529 295 A1**

(12) **EUROPEAN PATENT APPLICATION**

(43) Date of publication:
**26.03.2025 Bulletin 2025/13**

(21) Application number: **23199088.8**

(22) Date of filing: **22.09.2023**

(51) International Patent Classification (IPC):
*H04W 52/14* (2009.01)    *G06N 3/08* (2023.01)
*H04W 24/02* (2009.01)

(52) Cooperative Patent Classification (CPC):
**H04W 52/143; G06N 3/08; H04W 24/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Solutions and Networks Oy 02610 Espoo (FI)**

(72) Inventors:
• **MISHRA, Shashwat**
  **91120 Palaiseau (FR)**
• **SALAUN, Lou**
  **78830 Bonnelles (FR)**
• **YANG, Hong**
  **Ledgewood - NJ, 07852 (US)**
• **CHEN, Chung Shue**
  **92330 Sceaux (FR)**

(74) Representative: **Nokia EPO representatives Nokia Technologies Oy Karakaari 7 02610 Espoo (FI)**

(54) **DOWNLINK POWER ALLOCATION FOR MASSIVE MIMO USING GRAPH NEURAL NETWORK**

(57) Various example embodiments relate to downlink power allocation in general massive MIMO systems. A method may comprise: constructing a graph representing a plurality of user equipments and a plurality of access points, wherein the graph comprises a plurality of nodes, wherein each node represents a communication link between one user equipment of the plurality of user equipments and one access point of the plurality of access points, and for at least one node of the graph, determining a power control parameter for the access point associated with said node using a graph neural network, and transmitting the determined power control to the access point associated with said node.

FIG. 2

**Description**

**TECHNICAL FIELD**

Various example embodiments relate to general massive MIMO (massive multiple-input multiple-output) systems. Some example embodiments relate to downlink (DL) power allocation in general massive MIMO systems.

**BACKGROUND**

General massive MIMO deployments offer a practical compromise between the signaling overhead, coverage, and deployment complexity in a communication network comprising a plurality of User Equipments (UEs) and a plurality of Access Points (APs). General massive MIMO requires the computation of power coefficients for communication between the APs and the UEs.

**SUMMARY**

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure improve downlink power allocation in general massive MIMO systems. Example embodiments of the present disclosure improves computation of downlink power coefficients for general massive MIMO systems. Example embodiments have significantly lower computational complexity than the traditional techniques. Example embodiments have excellent generalization and applicability to various UE-AP association strategies, active UE densities, unseen radio morphologies, and/or deployment sizes. This and other benefits may be achieved by the features of the independent claims. Further example embodiments are provided in the dependent claims, the description, and the drawings.

According to a first aspect, an apparatus comprises at least one processor; and at least one memory including computer program code; the at least one memory and the computer program code configured to, with the at least one processor, cause the apparatus at least to perform operations comprising: constructing a graph representing a communication network, the communication network comprising a plurality of user equipments and a plurality of access points, wherein the graph comprises a plurality of nodes and at least one edge connecting two nodes of the plurality of nodes, wherein each node represents a communication link between one user equipment of the plurality of user equipments and one access point of the plurality of access points, and wherein the edge represents an activity status of the two communication links represented by said two nodes; processing the graph through a graph neural network to determine a power control parameter for the access point associated with at least one node of the plurality of nodes, and transmitting the determined power control parameter to the access point associated with the at least one node.

According to example implementations of the first aspect, each node indicates a state of the associated communication link.

According to example implementations of the first aspect, each node stores a large-scale fading coefficient for the associated communication link.

According to example implementations of the first aspect, each node is classified as either: an active node, if the node represents an active communication link, or an inactive node, if the node represents an inactive communication link.

According to example implementations of the first aspect, the graph comprises a plurality of edges, and wherein each edge connects two nodes of the plurality of nodes and represents the activity status of the two communication links represented by said two nodes.

According to example implementations of the first aspect, the activity status of the communication links represented by said two nodes are encoded in an edge attribute of the edge using a one-hot encoding scheme.

According to example implementations of the first aspect, each edge is classified as either: an access point type edge, if said edge connects two nodes associated with a same access point, or a user equipment type edge, if said edge connects two nodes associated with a same user equipment.

According to example implementations of the first aspect, processing the graph through the graph neural network comprises providing the graph and a target metric to the graph neural network.

According to example implementations of the first aspect, the operations further comprise: detecting a change in the communication network; evaluating whether the target metric is achieved for the plurality of user equipments; if the target metric is not achieved, updating the graph.

According to example implementations of the first aspect, the change in the communication network comprises one or more of: an addition or suppression of a user equipment, an addition or suppression of an access point, a change of the state of at least one of the communication links, or a change of the target metric.

According to example implementations of the first aspect, the operations further comprise: training the graph neural network on a training set comprising one or more sets of power coefficients determined using second order cone programming.

According to example implementations of the first aspect, the graph neural network comprises a multi-headed attention mechanism that captures a level of dependence between at least two of the user equipments or two of the access points, wherein the level of dependence is based one or more of: a relative geographic location and a respective state of the associated communication link.

According to example implementations of the first aspect, the operations further comprise: determining, using a differentiable function of the graph neural network, an association between the plurality of user equipments and the plurality of access points, wherein the determining of the association comprises determining the activity status of at least one of the communication links.

According to example implementations of the first aspect, the operations further comprise: repeating the determining of the association together with the determining of the power control parameter until the target metric is achieved.

According to a second aspect, a method comprises: constructing a graph representing a communication network, the communication network comprising a plurality of user equipments and a plurality of access points, wherein the graph comprises a plurality of nodes and at least one edge connecting two nodes of the plurality of nodes, wherein each node represents a communication link between one user equipment of the plurality of user equipments and one access point of the plurality of access points, and wherein the edge represents an activity status of the communication link represented by said two nodes; processing the graph through a graph neural network to determine a power control parameter for the access point associated with at least one node of the plurality of nodes, and transmitting the determined power control parameter to the access point associated with the at least one node.

According to example implementations of the second aspect, each node stores a large-scale fading coefficient for the associated communication link.

According to example implementations of the second aspect, each node is classified as either: an active node, if the node represents an active communication link, or an inactive node, if the node represents an inactive communication link.

According to example implementations of the second aspect, the graph comprises a plurality of edges, and wherein each edge connects two nodes of the plurality of nodes and represents an activity status of each communication links represented by said two nodes.

Example implementations of the second aspect further comprise: detecting a change in the communication network; evaluating whether a target metric is achieved for the plurality of user equipments; and if the target metric is not achieved, updating the graph.

According to a third aspect, a computer program comprises instructions, which when executed by an apparatus, cause the apparatus to perform the method according to any example implementations of the second aspect.

Example embodiments of the present disclosure can thus provide apparatuses, methods, computer programs, computer program products, or computer readable media for enabling a handover or cell switch with short delay. Any example embodiment may be combined with one or more other example embodiments. These and other aspects of the present disclosure will be apparent from the example embodiment(s) described below. According to some aspects, there is provided the subject matter of the independent claims. Some further aspects are defined in the dependent claims.

## DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:

FIG. 1 illustrates an example communication network.
FIG. 2 illustrates an example of method for downlink power allocation.
FIG. 3A illustrates an example graph representing the example communication network.
FIG. 3B is a table illustrating an example UE-AP association.
FIG. 3C is a table illustrating the nodes of the example graph.
FIG. 3D is a table illustrating the edges of the example graph.
FIG. 3E is a table illustrating the edges of the example graph.
FIG. 4 illustrates an example of an active node.
FIG. 5 illustrates an example encoding of edge attributes using one-hot vectors.
FIG. 6 illustrates an example sequence of operations carried out at each node on every iteration.
FIG. 7 illustrates an example of an apparatus configured to practice one or more example embodiments.

FIG. 8 illustrates an example of a method for downlink power allocation.

Like references are used to designate like parts in the accompanying drawings.

**DETAILED DESCRIPTION**

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

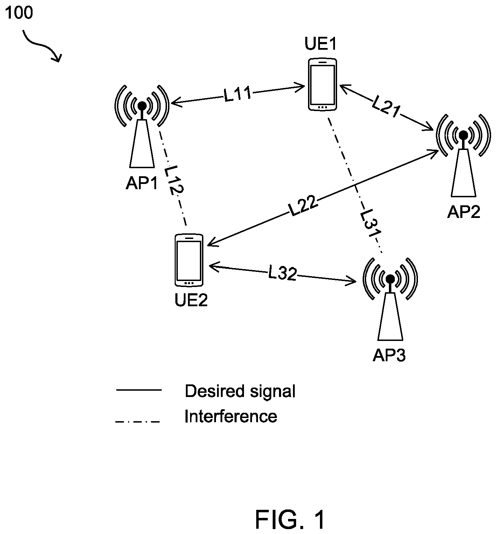

FIG. 1 illustrates an example of a communication network 100. Communication network 100 may comprise one or more devices, which may be also referred to as client nodes, user nodes, or user equipment (UE), represented in this example by first and second UE 111, 112 (collectively referred as UE 11x). UE 11X may communicate with one or more access nodes or access points (APs), represented in this example by first, second, and third APs 121, 122, 123 (collectively referred as AP 12y). UE 11x may in general communicate with any number (M) of APs 12y. AP 12y may serve one or more UE 11x. AP 12y may in general serve any number (K) of UE 11x.

Communications between UEs 110 and APs 120 may be bidirectional and hence any of these entities may be configured to operate as a transmitter and/or a receiver. Transmissions from UE 11x to AP 12y may be referred to as uplink (UL) transmissions. Transmissions from an AP 12y to a UE 11x may be referred to as downlink (DL) transmissions. An AP 12y may be configured with one or more DL power control parameters for communication with a particular UE 11x.

A UE-AP communication link L11, L21, L12, L22, L32, L31 (collectively referred as Lxy) between a UE UEx and an AP APy is characterized by a channel state. The channel state of the UE-AP communication link can be characterized by one or more parameters such as a large-scale fading coefficient. For an active communication link, the channel state represents the desired channel gain. For an inactive communication link, the channel state represents channel interference. Large scale-fading represents the average signal-power attenuation or path loss due to motion over large areas and it is impacted by terrain configuration between the AP and UE.

Some of the UE-AP communication links L21, L12, L32 are used for communication between the associated UE and associated AP. These UE-AP communication links L21, L12, L32 may be referred as active. It can also be said that the associated AP is serving the associated UE. Some of the UE-AP communication links L11, L22 are not used for communication between the associated UE and associated AP. These UE-AP communication links L21, L12, L32 may be referred as inactive. It can also be said that the associated AP is not serving the associated UE.

UE-AP association (also called UE-AP connectivity) determines which AP is serving which UE . In other words, UE-AP association determines an activity status (i.e., active/inactive) of each UE-AP communication link Lxy.

Each UE-AP communication link Lxy may be associated with a DL power coefficient, which is the power coefficient used by the associated AP to transmit to the associated UE. The determination of the power coefficients may be referred to as DL power allocation.

Communication network 100 may be a massive MIMO network. The communication network may comprise one or more of a partially connected cell-free deployment, a fully connected cell-free deployment, or a cellular deployment. A cell-free deployment typically has all the APs connected to all the UEs (e.g., fully connected). A cellular deployment typically has all the UEs connected to one or more APs corresponding to a given service area (e.g., referred to as the cell). A general massive MIMO system typically allows for any UE-AP connectivity ranging from fully connected to cellular. That is, a UE may be connected to a subset of APs (not necessarily corresponding to a cell).

Communication network 100 may be configured for example in accordance with the 5G or 6G digital cellular communication network, as defined by the 3rd Generation Partnership Project (3GPP). In one example, the communication network 100 may operate according to 3GPP 5G NR (New Radio). It is however appreciated that example embodiments presented herein are not limited to this example network and may be applied in any present or future wireless communication networks, or combinations thereof, for example other type of cellular networks, short-range wireless networks, broadcast or multicast networks, or the like.

An access point may be also called a base station (e.g., gNodeB), or a radio access network (RAN) node and it may be part of a RAN between the core network and the UE 110. Functionality of an access point may be distributed between a central unit (CU), for example a gNB-CU, and one or more distributed units (DU), for example gNB-DUs. It is therefore appreciated that access node functionality described herein may be implemented at a gNB, or divided between a gNB-CU and a gNB. Network elements such gNB, gNB-CU, and gNB-DU may be generally referred to as network nodes or network devices. Although depicted as a single device, a network node may not be a stand-alone device, but for example a distributed computing system coupled to a remote radio head. For example, a cloud radio access network (cRAN) may be applied to split control of wireless functions to optimize performance and cost.

General massive MIMO encompasses existing network architecture with different levels of distributed implementation. This includes different combinations of Centralized Unit (CU) and Distributed Unit (DU) split of 5G-NR base station, Coordinated MultiPoint (CoMP) deployments in LTE networks, small-cell networks, heterogeneous networks (HetNets) and Cloud-RAN (CRAN) based implementations for existing and future networks.

General massive MIMO deployments offer a practical compromise between the signaling overhead, coverage, and deployment complexity. As an example, a partially connected cell-free system has bounded feedback signaling to a central controller due to limited number of UEs per AP for network tasks including power allocation since an AP need not carry the signaling information for every UE in the system but only for the UEs served by it. The maximum number of UEs per AP, which may be a fraction of the total UEs, can be chosen by network based on tolerable processing delay and/or other relevant QoS requirements. This allows high operation flexibility and is important to a network operator.

Various example embodiments of the present disclosure tackle the problem of UE-AP association and downlink power allocation in general massive MIMO to achieve a target metric such as max-min SINR.

Various example embodiments of the present disclosure perform joint UE-AP association and downlink power allocation. Joint UE-AP association and downlink power allocation improves practical deployment of general massive MIMO.

For a given number of UEs and APs in the system and knowing the large-scale fading coefficients, the power allocation can be computed using optimization solvers such as SOCP (Second order cone programming). Such optimization solvers are too computationally expensive for real-time deployment leading to increased latency and signaling overhead which may severely affect the system performance. As such, while optimization solvers are suitable for simulation study work there are not suitable for real-time deployment in real communication networks.

Additionally, the power allocation is subject to the change in the network state such as the number of UEs in the system, the number of APs serving each UE and the channel gains. Therefore, the power allocation must be often updated to ensure a reasonable quality of service.

Various example embodiments of the present disclosure provide a power control solution that supports general massive MIMO network. More specifically, example embodiments functions well in a wide variety of network deployment with centralized and decentralized implementation and with different levels of possible information exchange between the UEs, APs and the central controller. Example embodiments are robust to variations in the system architecture e.g., the UE-AP association strategy, the number of active UEs, perform well under changing channel conditions and radio morphology without any re-training, and/or are easily scalable as the communication network expands. Example embodiments are close to the optimal in terms of the target system metric e.g., max-min SINR, max SE, weighted sum-rate, for all UEs. Example embodiments are computationally efficient and thus has fast execution time to support real-time power allocation in a dynamically changing deployment.

Various example embodiments of the present disclosure transform a general massive MIMO system into a heterogeneous graph G with a specific node-edge structure. In particular, various example embodiments use the edge attributes of a graph to embed the UE-AP association information. This specific node-edge structure makes it possible for a graph neural network (GNN) to generalize well over general massive MIMO systems ranging from cellular to cell-free massive MIMO systems. Some example embodiments provide a unified solution for UE-AP association and power allocation supported by a lightweight model requiring a small training dataset that is computationally efficient to support real-time deployment.

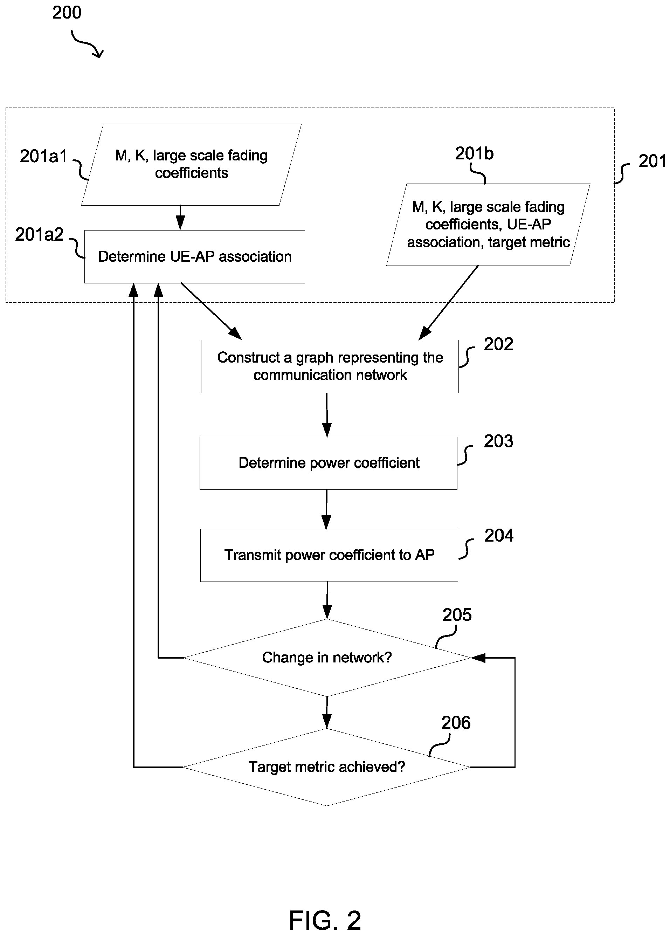

FIG. 2 illustrates an example of a method 200 for downlink power allocation. Method 200 may be implemented at a central controller, e.g., a central unit (CU) of the base station (e.g., gNodeB), a baseband unit (BBU), Centralized Radio Access Network (C-RAN), or virtualized radio access network (V-RAN).

At operation 201, method 200 accesses UE-AP association $\Omega$, the large-scale fading coefficients, and a target metric (e.g., max-min SINR).

In example embodiments, method 200 may access, at operation 201a1, the large-scale fading coefficients, and the target metric, and determine, at operation 201a2, the UE-AP association $\Omega$. The UE-AP association $\Omega$ may be determined using heuristics such as stable matching or using the GNN. In particular, UE-AP association may be jointly learned with the power control using a differentiable UE-AP matching function of the GNN. This allows for backpropagation of losses and thus learning the best UE-AP matching. The differentiable UE-AP matching function (e.g., operation 201a2) may run iteratively with the power allocation (e.g., operation 203) until the target metric is achieved (e.g., operation 206).

In example embodiments, method 200 may access, at operation 201b, the UE-AP association $\Omega$, the large-scale fading coefficients, and the target metric.

At operation 202, method 200 constructs a graph G representing the communication network 100.

The graph G is a heterogeneous graph G with a node-edge structure that captures the network topology and the UE-AP association $\Omega$. The graph G contains information about the network topology, the UE-AP association $\Omega$, the desired signal between different UE-AP links, and the associated interference.

The UE-AP association $\Omega$ is added to the graph 401 as edge attributes. As explained above, the UE-AP association $\Omega$ may be chosen independently of the power control using heuristics such as stable matching or jointly learned with the power control using the GNN.

The nodes of the graph *G* represent the communication links, while the edges of the graph represent UE-AP association. This particular graph structure enables excellent generalization over a wide range of scenarios while being computationally efficient.

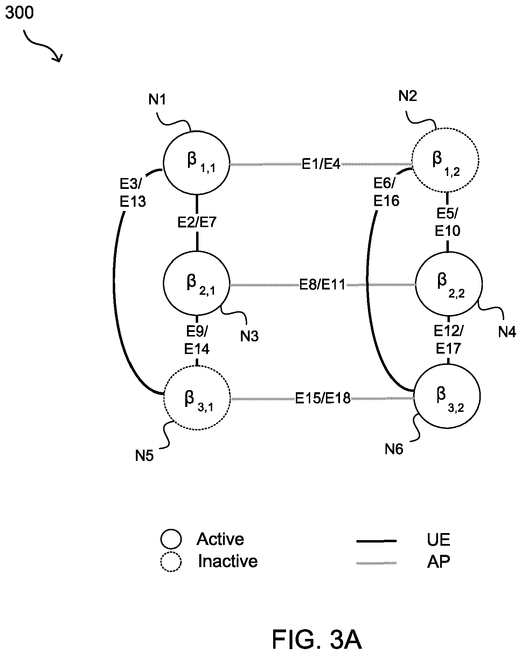

FIG. 3A illustrates an example of a graph *G* 300. The graph 300 comprises a plurality of nodes N1 to N6 (collectively referred as Ni). Each node Ni represents a communication link Lxy between one UE UEx and one AP APy. Each node Ni stores information regarding the channel state (e.g., channel gain, large scale fading coefficient) of the associated UE-AP communication link Lxy. In example embodiments, each UE-AP communication link Lxy between one UE UEx and one AP APy is represented by a node Ni irrespective of whether the associated UE UEx is currently served by the associated AP APy. Each node Ni may be classified as active or inactive depending upon whether the associated UE UEx is served by the associated AP APy.

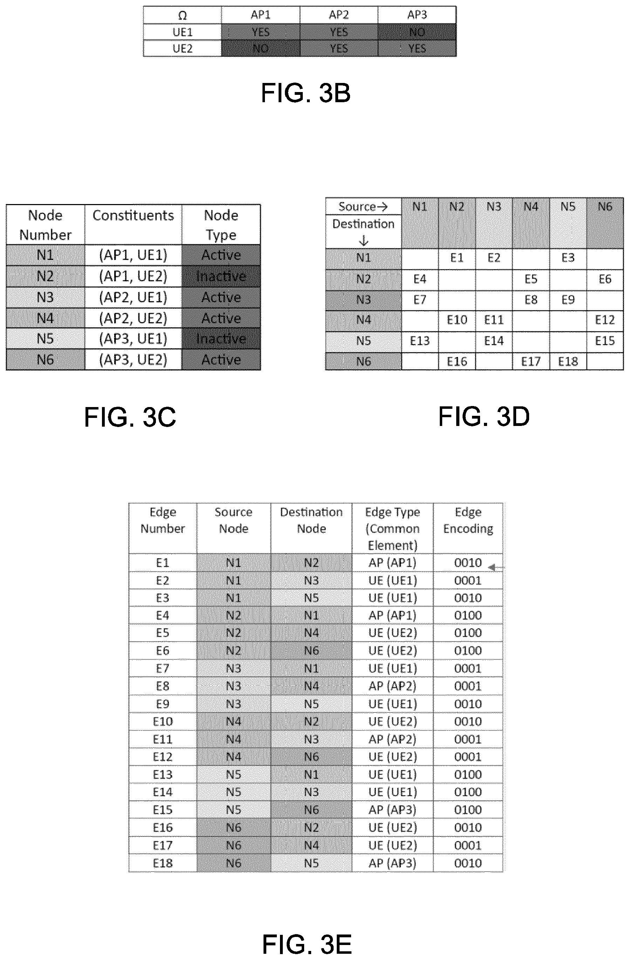

FIG. 3B is a table illustrating an example UE-AP association in example communication network 100. AP1 is serving UE1, AP2 is serving UE1 and UE2. AP3 is serving UE2. In other words, UE-AP communication links L11, L21, L22, and L32 are active, while UE-AP communication links L12 and L31 are inactive.

FIG. 3C is a table illustrating the nodes of example graph 300. Each node contains the large-scale fading gain. A node thus informs only binary decision about service between one AP and one UE.

FIG. 3D is a table illustrating the edges of example graph 300. An edge connects two nodes only if they share an AP or a UE. For example, there is an edge between N1-N2, N3-N4 etc. but not between N1-N4 or N2-N3. There are no self-edges (N1-N1, N2-N2...). An AP edge connects two nodes sharing an AP. The AP edge indicates whether the shared AP serves the two associated UEs. An UE edge connects two nodes sharing an UE. The UE edge indicates whether the shared UE is served by the two associated APs. For example, edge E1 indicates that AP1 is shared between nodes N1 and N2. E1 further indicates that AP1 serves UE1 but does not serve UE2.

FIG. 3E is a table illustrating the edges of example graph 300. The set of all edges precisely contain the entire UE-AP association Ω. This is a compact way of including the UE-AP association Ω in the graph, as opposed to iterating over all the nodes for a given AP or given UE. This enables the same GNN model to make predictions of power using a given UE-AP association Ω, which may correspond to any type of general MIMO deployment (Generalizability). Alternatively, the GNN can compute Ω and power by iterative refinement (assume an initial random connectivity then calculate power, then the target metric. Re-compute connectivity and power until target metric is achieved). Some edges like E1 and E4 contain the same information but differ only in which node is the source and which one is the destination, represented by the edge encoding (Directionality). Directionality is an inherent feature of many GNN code implementation (e.g., on PyTorch). This helps the graph be more expressive which helps the GNN learn and generalize better.

At operation 203, method 200 determines at least one power coefficient for at least one of the communication links by processing the graph *G* through a GNN. The GNN may be defined as an artificial neural network for processing data that can be represented as a graph.

The GNN takes as input the graph *G,* and a target metric such as max-min SINR. In an input representation of the graph *G,* an input representation of each node includes information regarding the channel state (e.g., large scale fading coefficient) of the associated UE-AP communication link. In particular, the input representation of each node may store the most recent large scale fading coefficient for the associated UE-AP communication link.

The GNN outputs power coefficients for one or more APs to use for transmission to one or more UEs to achieve the target metric. In particular, the GNN may output the near-optimal power control coefficient matrix $\eta$.

The GNN may be trained in an offline fashion using a training dataset. The training dataset may comprise one or more sets of power coefficients determined using traditional solutions based on SOCP (Second order cone programming). During the online inference phase, the GNN is executed at the central controller (e.g., central processing unit (CPU)).

At operation 204, method 200 transmits the power coefficients (e.g., power control coefficient matrix $\eta$) to each AP for performing the precoding and power allocation of downlink signals.

Method 200 may update the graph *G* (e.g., repeat operation 202) when a change of the network state is detected. The change may be due to a change in the network such as new UEs entering or leaving the system, APs going out of service, the update of the large-scale fading coefficients of the UEs or the quality or nature of the target metric.

At operation 205, method 200 may detect a change in the network. The change may be a change in one or more system-level metrics, such as interference level or UE level metric such as SINR or delay to trigger a change at this state.

If a change is detected, method 200 may reevaluate, at operation 206, whether the UE-AP association achieves the target metric for all UEs with the given large-scale fading coefficients. If the UE-AP association achieves the target metric, method 200 may wait to observe a change in the network. Otherwise, method 200 may update graph *G.* The large-scale fading $\beta$ may be periodically updated to reflect, for example, possible user movements, even if the network topology and the UE-AP association remain the same through network measurements such as RSSI. Method 200 may also defer the construction of a new graph to some later time to avoid resource congestion due to excessively frequent re-construction requests by comparing the last time the graph was formed with some threshold time that may be determined based on the network capabilities.

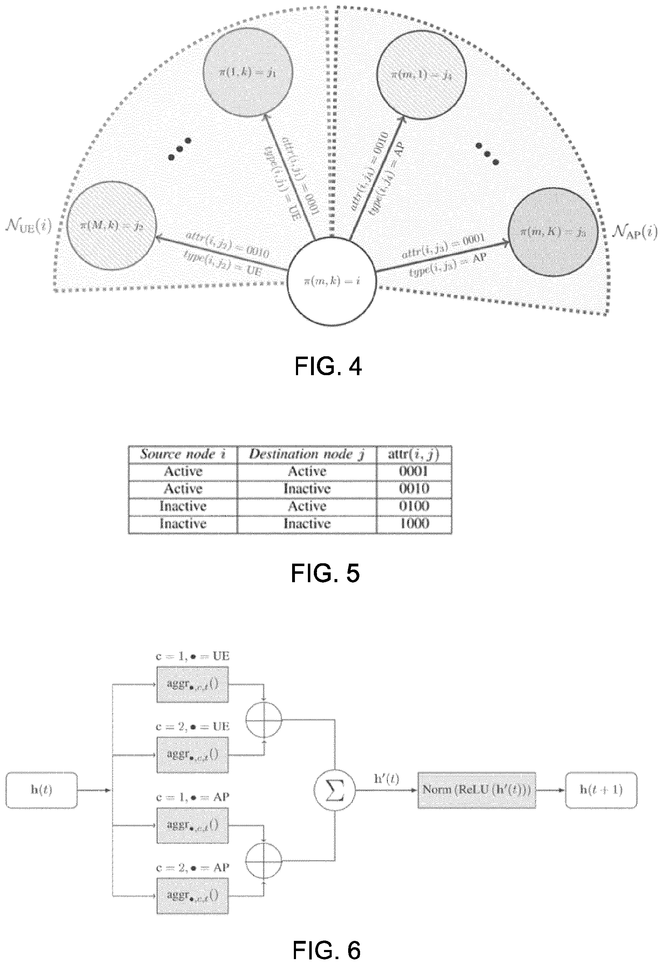

FIG. 4 depicts an example of an active node in the system highlighting the edge type and edge attributes of its neighbour nodes.

In the following, the total number of APs in the system are denoted by $M$. The total number of UEs are denoted by $K$. Furthermore, $M'$ represents the maximum number of APs serving a UE in the case of a partially connected system and similarly $K'$ represents the maximum number of UEs served by each AP.

The graph $G$ is a heterogeneous graph $G = (V, E)$ consisting of $V$ the set of nodes and $E$ the set of directed edges. The graph has a total of $MK$ nodes where each node consists of the pair $(m, k')$ representing the channel between the the $m^{th}$ AP and $k^{th}$ UE. $\pi(m, k) = i$ represents the mapping between node indexed $i \in V = \{1, \dots, MK\}$ and the pair the $(m, k)$. $\pi(m, k') = i$ is a bijective mapping, e.g., $\pi^{-1}(i) = (m, k)$.

Each node can be classified into two types: active or inactive, depending on whether UE $k$ gets served by AP $m$ in the system or not. This classification of the nodes into node types captures the connectivity between the UEs and the APs.

One edge may be created between two nodes if the two nodes share the same AP or the same UE. The edges are directed. Further, there is no self-loop in the graph representation, i.e., $\forall i \in V$, $(i, i) \notin E$.

Each edge can be classified into two types: AP or UE. An edge is either of type AP or type UE depending on whether the nodes it connects share the same AP or the same UE. This heterogeneous edge construction allows the GNN to apply different operations on each type of edges.

The edge classification may be embedded in the edge as follows: for all m, m' $\in \{1, \dots, M\}$, $m \neq m'$ and k, k' $\in \{1, \dots, K\}$, $k \neq k'$:

   i.

$$e = \big(\pi(m, k), \pi(m, k')\big) \in E \text{ and } type(e) = AP,$$

   ii.

$$e = \big(\pi(m, k), \pi(m', k)\big) \in E \text{ and } type(e) = UE.$$

Additionally, the nodes on either side of the edge may be active or inactive. The activity status of the nodes (e.g., active/inactive) is conveyed by UE-AP association $\Omega$ (e.g., which AP serves which UEs). The activity status of the nodes may be computed using the GNN or given as an input based on heuristics suitable for the deployment.

In example embodiments, the activity status of the nodes may be computed using the GNN. To determine UE-AP association using the GNN, the differentiable function corresponding to the UE-AP association may decide which AP serves which UE through iterative method. As an example, an evolutionary algorithm (EA) may be used to figure out the best UE-AP association and the associated power control. In other example embodiments, pre-computed UE-AP association may be provided as an input. Pre-computed UE-AP association, such as the ones based on distance, may not take into consideration the optimal power for the UEs.

The UE-AP connectivity information may be embedded in the edge attributes of the graph representation using a one-hot encoding scheme as shown in the table of FIG. 5. This improves the generalization capacity of the GNN. In particular, this enables the generalization of the GNN to fully connected as well as partially connected systems without any additional training data or restructuring.

For any node $i \in V$, the set of neighbors are defined as:

$$\mathcal{N}(i) = \{j \in V : (i, j) \in E\}.$$

These neighbors can be partitioned into two disjoint sets depending upon whether they share an AP or UE with node $i$:

$$\mathcal{N}_{UE}(i) = \{j \in V : (i, j) \in E \text{ and } type\big((i, j)\big) = UE\},$$

$$\mathcal{N}_{AP}(i) = \{j \in V : (i, j) \in E \text{ and } type\big((i, j)\big) = AP\}.$$

Each node $i \in V$ has an associated tensor $h_i$ called its node feature. The initial node features are set based on the most recent large-scale fading coefficient matric $\beta = (\beta_{m,k})_{m=1\dots M, k=1\dots K}$, e.g., the most recent channel gain matrix received by the system. $h_i(0) = \beta_{m,k}$, where $\pi(m, k) = i$ for all $i \in V$. The GNN subsequently updates the node features through $T$ iterations, e.g., $h_i(t)$, for $t = 1, \dots, T$ with the objective of approximating the optimal power control matrix $\eta$ as the final features for all $i \in V$, i.e., $h_i(T) = \eta_{m,k}$. The intermediate features, for $t = 1, \dots, T$, are the hidden layers.

FIG. 6 illustrates an example sequence of operations carried out at each node on every iteration.

In the following, $\mathcal{L}$ denotes a linear operation that takes as input a tensor x of size n and outputs a tensor $\mathcal{L}(x)$ of size m according to the relation: $\mathcal{L}(x) = Wx + b$, where $W \in \mathbb{R}^{m \times n}$ and $b \in \mathbb{R}^{m}$ are trainable parameters called weight and bias. The aggregation functions $aggr_{o,c,t}()$ for $o \in \{AP, UE\}$, $c \in \{1,2\}$ may be based on the graph transformer in Y. Shi, Z. Huang, S. Feng, H. Zhong, W. Wang, and Y. Sun, "Masked label prediction: Unified message passing model for semi-supervised classification," arXiv preprint arXiv:2009.03509, 2020.

The feature tensor of each node $i \in V$ is updated based on the features of its direct neighbors at the previous iteration. In the following, an attention layer is defined as:

$$aggr_{o,c,t}(i) = \mathcal{L}_o^1(h_i) + \sum_{j \in \mathcal{N}} MP_{i,j}$$

The message-passing function between the nodes is defined as follows:

$$MP_{i,j} = \alpha_o(i,j) \times (\mathcal{L}_o^2(h_j) + \mathcal{L}_o^3(attr(i,j))$$

where $\alpha_o(i, j)$ is the attention coefficient between source node $i$ and destination node $j$, such that:

$$\alpha_o(i,j) = \frac{\langle \mathcal{L}_o^4(h_i), (\mathcal{L}_o^5(h_j) + \mathcal{L}_o^3(attr(i,j)) \rangle}{\sum_{j \in \mathcal{N}_o(i)} \langle \mathcal{L}_o^4(h_i), (\mathcal{L}_o^5(h_j) + \mathcal{L}_o^3(attr(i,j)) \rangle}$$

where $\langle x, y \rangle = \exp\left(\frac{x^T y}{\sqrt{d}}\right)$ is the exponential scale dot-product as defined for example in Vaswani, A., Shazeer, N., Parmar, N., Uszkoreit, J., Jones, L., Gomez, A. N., Kaiser, L. & Polosukhin, I, "Attention is all you need". Advances in Neural Information Processing Systems (p./pp. 5998--6008), (2017). $d$ is the tensor size of each attention head. $attr(i,j)$ is the edge attribute for the edge between source node $i$ and destination node $j$. A multi-headed attention mechanism may be used such that each node can focus specifically on a subset of its neighbors that are of interest rather than imparting equal importance to all its neighbors. Each of these functions may be implemented with $C = 2$ attention heads. The attention coefficient controls which feature $h_j(t)$ contributes to $h_i(t + 1)$ with the feature being discarded if $\alpha_o(i, j) \sim 0$, and kept otherwise. This essentially captures the level of dependence between two APs (or UEs) which varies due to factors such as their relative geographic location and channel conditions.

The two attention heads corresponding to $c = 1$ and $c = 2$ are processed separately and then concatenated into a single tensor. This concatenation operation is shown at the addition junction. The resultant intermediate node tensor $h_i'(t)$ is calculated as:

$$h_i'(t) = \sum_{o \in \{UE, AP\}} \bigoplus_{c=1}^{C} aggr_{o,c,t}(i)$$

The tensor containing all the intermediate node tensors is denoted as $h'(t)$. The node tensor for the next iteration is obtained after applying ReLU activation followed by layer normalization as:

$$h(t + 1) = Norm(ReLU(h'(t)))$$

Edge features are added to the keys after linear transformation, e.g., before computing the attention dot product. They are also added to final values after the same linear transformation. The edge attributes encapsulate the activity status of the nodes on either side of a type UE or type AP edge. Edge attributes can be added on the fly with minimal increase in the model run-time, hence making the size of the training dataset small. Additionally, edge attributes enable the trained model to be versatile and more generalizable compared to other methods such as masking since each combination of {edge type, activity} has its weight that can be tuned for better learning.

The GNN structure may be optimized to achieve near-optimal performance within reasonable complexity by rigorous experimentation. In example embodiments, the GNN model contains 11 hidden layers, i.e., $T = 12$, with the following node feature tensor sizes ($in = 1, 8, 10, 16, 24, 36, 64, 36, 24, 16, 10, 8, out = 1$).

The input and output both have a single value per node to represent respectively the large-scale fading coefficient, and the power control coefficient for each channel. Each hidden layer, for $t = 1, ...,11$, is obtained from the previous layer by applying the multi-head attention neural network. The final output tensor is obtained by applying a linear activation of the form $h_i(T) = \mathcal{L}_{out}\big(h_i(T-1)\big)$, for all node $i \in V$.

The performance of the GNN is evaluated in terms of spectral efficiency, computational complexity, and generalizability for different system sizes and deployment morphologies, e.g., compared to the optimal SOCP benchmark. To evaluate the complexity of each algorithm, the number of floating-point operations (FLOPS) during execution is counted. Each multiplication or addition counts as one FLOP.

In example numerical studies, the total number of UEs varies from $K = 5$ to 32 while the number of UEs served by each AP in the partially connected case range from $K' = 5$ to 18, to evaluate a wide range of active UE densities. The APs and UEs are considered to be deployed in a circular disk of a radius of 500 meters for the urban scenario, 1 km for the suburban, and 4 km for the rural following a uniform random distribution. The example numerical studies utilize the "NLoS" propagation model from M. Series, "Guidelines for evaluation of radio interface technologies for IMT-Advanced," Report ITU M.2135-1, 2009, and the path loss parameters used are the same as in L. Salaün, H. Yang, S. Mishra, and C. S. Chen, "A GNN Approach for Cell-Free Massive MIMO," GLOBECOM 2022 - 2022 IEEE Global Communications Conference, Rio de Janeiro, Brazil, 2022, pp. 3053-3058.

The number of APs in the example numerical studies ranges from $M = 24$ to 128 with the number of APs in the range $M' = 11$ to 72 during partial connectivity scenario. The number of UEs ranges from $K = 5$ to 32 while the number of UEs served by each AP in the partially connected case range from $K' = 3$ to 18. For the evaluating case of cellular system, the example numerical studies consider $BS$ number of base stations with $\lceil M/BS \rceil$ antennas each. Here [x] is the ceiling function that returns the successive greatest integer to x. These APs and UEs are randomly distributed in a circular area within a radius of 500 meters for the urban scenario, 1 km for suburban and 4 km for rural.

The results show the spectral efficiency cumulative distribution function (CDF) achieved by the different algorithms for various simulation scenarios. 1,000 large-scale fading realizations have been generated for each simulation scenario. The *performance loss at median* refers to the relative difference in spectral efficiency between the GNN-based solution and the optimal solution obtained by SOCP, taken at the median of the CDF. The *95%-likely performance* refers to the spectral efficiency at the 5-th percentile signifying the coverage quality for 95% of the users.

The GNN adapts well to the varying morphology of deployment, e.g., over the rural and suburban morphologies. During its training the GNN may only utilized the urban morphology, yet it can perform well on other morphologies. This is because the GNN is robust to change is in the scale of the SINR due to the difference in the service area size and propagation conditions of the morphologies.

The GNN can equally well handle unseen user densities, despite training on only a limited set of active node densities as shown in. The number of service APs per UE may be varied for a fixed morphology and network size. The GNN performs efficient power allocation irrespective of the size of the input since it learns the essential neighborhood relationships between the nodes. In the case of partially connected CFmMIMO networks, this strength comes into play as the attention mechanism allows the GNN to learn the general node relational characteristics of a certain active node distribution rather than relying on the exact number of active nodes present in the network. This makes the model robust, versatile, and highly generalizable.

Unlike the SOCP solution, the computational complexity of the GNN does not depend on the number of active nodes in the system. It only depends on the number of edges in the graph. Notably, the GNN-based solution presented performs power allocation over any active node density at near-constant computational complexity. This gain is very significant for practical deployments since the GNN can support a system with up to 100 times lesser FLOPS than the existing optimal SOCP solution while maintaining similar optimal spectral efficiency. This advantage in terms of FLOPs becomes more significant as the network size grows larger.

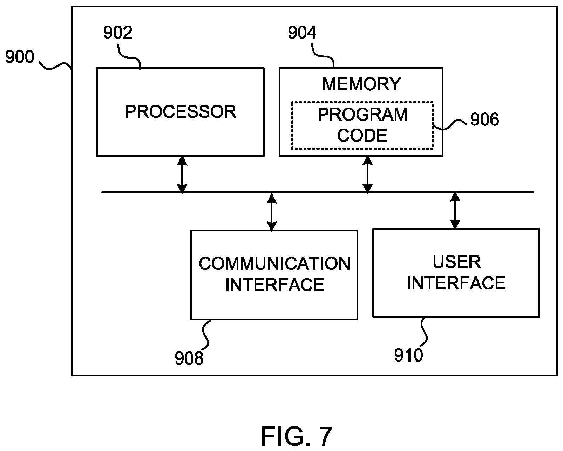

FIG. 7 illustrates an example of an apparatus 900 configured to practice one or more example embodiments. Apparatus 900 may be implemented as a central controller, e.g., a central unit (CU) of the base station (e.g., gNodeB), a baseband unit (BBU), Centralized Radio Access Network (C-RAN), or virtualized radio access network (V-RAN). Apparatus 900 may comprise a device configured to implement functionality described herein. Apparatus 900 may comprise at least one processor 902. The at least one processor 902 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 900 may further comprise at least one memory 904. The memory 904 may be configured to store, for example, computer program code or the like, for example operating system software and application software. The memory 904 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.). Memory 904 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM).

Apparatus 900 may further comprise a communication interface 908 configured to enable apparatus 900 to transmit and/or receive information. The communication interface 908 may comprise an internal or external communication interface, or a radio interface. Apparatus 900 may further comprise other components and/or functions such as for example a user interface (not shown) comprising at least one input device and/or at least one output device. The input device may take various forms such a keyboard, a touch screen, or one or more embedded control buttons. The output device may for example comprise a display, a speaker, or the like.

When apparatus 900 is configured to implement some functionality, some component and/or components of apparatus 900, such as for example the at least one processor 902 and/or the at least one memory 904, may be configured to implement this functionality. Furthermore, when the at least one processor 902 is configured to implement some functionality, this functionality may be implemented using program code 906 comprised, for example, in the at least one memory 904.

The functionality described herein may be performed, at least in part, by one or more computer program product components such as software components. According to an example embodiment, apparatus 900 comprises a processor or processor circuitry, such as for example a microcontroller, configured by the program code 906, when executed, to execute the embodiments of the operations and functionality described herein. Program code 906 is provided as an example of instructions which, when executed by the at least one processor 902, cause performance of apparatus 900.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

Apparatus 900 may be configured to perform, or cause performance of, method(s) described herein or comprise means for performing method(s) described herein. In one example, the means comprises the at least one processor 902, the at least one memory 904 including program code 906 configured to, when executed by the at least one processor 902, cause apparatus 900 to perform the method(s). In general, computer program instructions may be executed on means providing generic processing functions. Such means may be embedded for example in a personal computer, a smart phone, a network device, or the like. The method(s) may be thus computer-implemented, for example based algorithm(s) executable by the generic processing functions, an example of which is the at least one processor 902. The means may comprise transmission or reception means, for example one or more radio transmitters or receivers, which may be coupled or be configured to be coupled to one or more antennas, or transmitter(s) or receiver(s) of a wired communication interface. Although apparatus 900 is illustrated as a single device, it is appreciated that, wherever applicable, functions of apparatus 900 may be distributed to a plurality of devices.

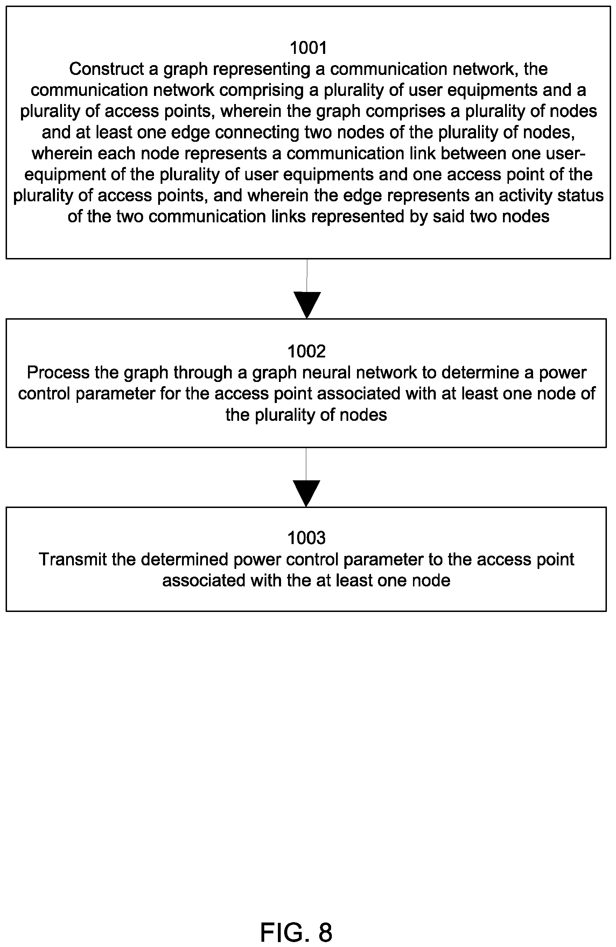

FIG. 8 illustrated an example of a method for power allocation.

At 1001, the method may comprise constructing a graph representing a communication network, the communication network comprising a plurality of user equipments and a plurality of access points, wherein the graph comprises a plurality of nodes and at least one edge connecting two nodes of the plurality of nodes, wherein each node represents a communication link between one user equipment of the plurality of user equipments and one access point of the plurality of access points, and wherein the edge represents an activity status of the two communication links represented by said two nodes.

At 1002, the method may comprise processing the graph through a graph neural network to determine a power control parameter for the access point associated with at least one node of the plurality of nodes.

At 1003, the method may comprise transmitting the determined power control parameter to the access point associated with the at least one node .

The method may be performed an apparatus, for example by apparatus 900 based on program code 906, when executed by processor 902, or based on circuitry configured to perform the method, as described above. Various examples of the methods are explained above, for example with reference to FIGs. 1 to 6. It should be understood that example embodiments described may be combined in different ways unless explicitly disallowed.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

**Claims**

1. An apparatus, comprising:

at least one processor; and
at least one memory including computer program code;
the at least one memory and the computer program code configured to, with the at least one processor, cause the apparatus at least to perform operations comprising:

constructing a graph representing a communication network, the communication network comprising a plurality of user equipments and a plurality of access points, wherein the graph comprises a plurality of nodes and at least one edge connecting two nodes of the plurality of nodes, wherein each node represents a communication link between one user equipment of the plurality of user equipments and one access point of the plurality of access points, and wherein the edge represents an activity status of the two communication links represented by said two nodes;

processing the graph through a graph neural network to determine a power control parameter for the access point associated with at least one node of the plurality of nodes, and

transmitting the determined power control parameter to the access point associated with the at least one node.

2. The apparatus of claim 1, wherein each node indicates a state of the associated communication link.

3. The apparatus of claim 2, wherein each node stores a large-scale fading coefficient for the associated communication link.

4. The apparatus of any of claims 1 to 3, wherein each node is classified as either:

an active node, if the node represents an active communication link, or
an inactive node, if the node represents an inactive communication link.

5. The apparatus of any of claims 1 to 4, wherein the graph comprises a plurality of edges, and wherein each edge connects two nodes of the plurality of nodes and represents the activity status of the two communication links represented by said two nodes.

6. The apparatus of claim 5, wherein the activity status of the communication links represented by said two nodes are encoded in an edge attribute of the edge using a one-hot encoding scheme.

7. The apparatus of claim 5 or 6, wherein each edge is classified as either:

an access point type edge, if said edge connects two nodes associated with a same access point, or
a user equipment type edge, if said edge connects two nodes associated with a same user equipment.

8. The apparatus of any of claims 1 to 7, wherein processing the graph through the graph neural network comprises providing the graph and a target metric to the graph neural network.

9. The apparatus of claim 8 wherein the operations further comprise:

detecting a change in the communication network;
evaluating whether the target metric is achieved for the plurality of user equipments;
if the target metric is not achieved, updating the graph.

10. The apparatus of claim 9, wherein the change in the communication network comprises one or more of: an addition or suppression of a user equipment, an addition or suppression of an access point, a change of the state of at least one of the communication links, or a change of the target metric.

11. The apparatus of claim 1 to 10, wherein the operations further comprise:
training the graph neural network on a training set comprising one or more sets of power coefficients determined using second order cone programming.

12. The apparatus of any of claims 1 to 11, wherein the graph neural network comprises a multi-headed attention mechanism that captures a level of dependence between at least two of the user equipments or two of the access points, wherein the level of dependence is based one or more of: a relative geographic location and a respective state of the associated communication link.

13. The apparatus of any of claims 1 to 12, wherein the operations further comprise:
determining, using a differentiable function of the graph neural network, an association between the plurality of user equipments and the plurality of access points, wherein the determining of the association comprises determining the activity status of at least one of the communication links.

14. The apparatus of claim 13, wherein the operations further comprise:

repeating the determining of the association together with the determining of the power control parameter until the target metric is achieved.

15. A method, comprising:

constructing a graph representing a communication network, the communication network comprising a plurality of user equipments and a plurality of access points, wherein the graph comprises a plurality of nodes and at least one edge connecting two nodes of the plurality of nodes, wherein each node represents a communication link between one user equipment of the plurality of user equipments and one access point of the plurality of access points, and wherein the edge represents an activity status of the communication link represented by said two nodes;
processing the graph through a graph neural network to determine a power control parameter for the access point associated with at least one node of the plurality of nodes, and
transmitting the determined power control parameter to the access point associated with the at least one node.

16. The method of claim 15, wherein each node stores a large-scale fading coefficient for the associated communication link.

17. The method of claim 15 or 16, wherein each node is classified as either:

an active node, if the node represents an active communication link, or
an inactive node, if the node represents an inactive communication link.

18. The method of any of claims 15 to 17, wherein the graph comprises a plurality of edges, and wherein each edge connects two nodes of the plurality of nodes and represents an activity status of each communication links represented by said two nodes.

19. The method of any of claims 15 to 18, further comprising:

detecting a change in the communication network;
evaluating whether a target metric is achieved for the plurality of user equipments;
if the target metric is not achieved, updating the graph.

20. A computer program comprising instructions, which when executed by an apparatus, cause the apparatus to perform the method according to any of claims 18 to 19.

FIG. 1

200

201a1 — M, K, large scale fading coefficients

201b

M, K, large scale fading coefficients, UE-AP association, target metric

201

201a2 — Determine UE-AP association

Construct a graph representing the communication network 202

Determine power coefficient 203

Transmit power coefficient to AP 204

Change in network? 205

Target metric achieved? 206

FIG. 2

300

N1

$\beta_{1,1}$

E1/E4

N2

$\beta_{1,2}$

E3/
E13

E2/E7

E6/
E16

E5/
E10

$\beta_{2,1}$

E8/E11

$\beta_{2,2}$

E9/
E14

N3

N4

E12/
E17

$\beta_{3,1}$

E15/E18

$\beta_{3,2}$

N5

N6

○ Active

━━━ UE

◌ Inactive

▭▭▭ AP

FIG. 3A

| Ω | AP1 | AP2 | AP3 |
|---|---|---|---|
| UE1 | YES | YES | NO |
| UE2 | NO | YES | YES |

## FIG. 3B

| Node Number | Constituents | Node Type |
|---|---|---|
| N1 | (AP1, UE1) | Active |
| N2 | (AP1, UE2) | Inactive |
| N3 | (AP2, UE1) | Active |
| N4 | (AP2, UE2) | Active |
| N5 | (AP3, UE1) | Inactive |
| N6 | (AP3, UE2) | Active |

## FIG. 3C

| Source→ Destination ↓ | N1 | N2 | N3 | N4 | N5 | N6 |
|---|---|---|---|---|---|---|
| N1 |  | E1 | E2 |  | E3 |  |
| N2 | E4 |  |  | E5 |  | E6 |
| N3 | E7 |  |  | E8 | E9 |  |
| N4 |  | E10 | E11 |  |  | E12 |
| N5 | E13 |  | E14 |  |  | E15 |
| N6 |  | E16 |  | E17 | E18 |  |

## FIG. 3D

| Edge Number | Source Node | Destination Node | Edge Type (Common Element) | Edge Encoding |
|---|---|---|---|---|
| E1 | N1 | N2 | AP (AP1) | 0010 |
| E2 | N1 | N3 | UE (UE1) | 0001 |
| E3 | N1 | N5 | UE (UE1) | 0010 |
| E4 | N2 | N1 | AP (AP1) | 0100 |
| E5 | N2 | N4 | UE (UE2) | 0100 |
| E6 | N2 | N6 | UE (UE2) | 0100 |
| E7 | N3 | N1 | UE (UE1) | 0001 |
| E8 | N3 | N4 | AP (AP2) | 0001 |
| E9 | N3 | N5 | UE (UE1) | 0010 |
| E10 | N4 | N2 | UE (UE2) | 0010 |
| E11 | N4 | N3 | AP (AP2) | 0001 |
| E12 | N4 | N6 | UE (UE2) | 0001 |
| E13 | N5 | N1 | UE (UE1) | 0100 |
| E14 | N5 | N3 | UE (UE1) | 0100 |
| E15 | N5 | N6 | AP (AP3) | 0100 |
| E16 | N6 | N2 | UE (UE2) | 0010 |
| E17 | N6 | N4 | UE (UE2) | 0001 |
| E18 | N6 | N5 | AP (AP3) | 0010 |

## FIG. 3E

FIG. 4

| Source node $i$ | Destination node $j$ | attr$(i, j)$ |
|---|---|---|
| Active | Active | 0001 |
| Active | Inactive | 0010 |
| Inactive | Active | 0100 |
| Inactive | Inactive | 1000 |

FIG. 5

FIG. 6

FIG. 7

1001
Construct a graph representing a communication network, the communication network comprising a plurality of user equipments and a plurality of access points, wherein the graph comprises a plurality of nodes and at least one edge connecting two nodes of the plurality of nodes, wherein each node represents a communication link between one user-equipment of the plurality of user equipments and one access point of the plurality of access points, and wherein the edge represents an activity status of the two communication links represented by said two nodes

1002
Process the graph through a graph neural network to determine a power control parameter for the access point associated with at least one node of the plurality of nodes

1003
Transmit the determined power control parameter to the access point associated with the at least one node

FIG. 8

Europäisches
Patentamt

European
Patent Office

Office européen
des brevets

# EUROPEAN SEARCH REPORT

Application Number

EP 23 19 9088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SALAUN LOU ET AL: "A GNN Approach for Cell-Free Massive MIMO", GLOBECOM 2022 - 2022 IEEE GLOBAL COMMUNICATIONS CONFERENCE, IEEE, 4 December 2022 (2022-12-04), pages 3053-3058, XP034268313, DOI: 10.1109/GLOBECOM48099.2022.10001647 [retrieved on 2023-01-11] * sections II, III * | 1-20 | INV. H04W52/14 G06N3/08 H04W24/02 |
| | | | TECHNICAL FIELDS SEARCHED (IPC) |
| | | | H04W G06N |

The present search report has been drawn up for all claims

| Place of search | Date of completion of the search | Examiner |
|---|---|---|
| The Hague | 7 March 2024 | Tejera, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. SHI** ; **Z. HUANG** ; **S. FENG** ; **H. ZHONG** ; **W. WANG** ; **Y. SUN**. Masked label prediction: Unified message passing model for semi-supervised classification. *arXiv preprint arXiv:2009.03509*, 2020
- **VASWANI, A** ; **SHAZEER, N.** ; **PARMAR, N.** ; **USZKOREIT, J.** ; **JONES, L** ; **GOMEZ, A. N.** ; **KAISER, L** ; **POLOSUKHIN, I**. Attention is all you need. *Advances in Neural Information Processing Systems*, 2017, 5998-6008
- **M. SERIES**. Guidelines for evaluation of radio interface technologies for IMT-Advanced. *Report ITU M.2135-1*, 2009
- **L. SALAÜN** ; **H. YANG** ; **S. MISHRA** ; **C. S. CHEN**. A GNN Approach for Cell-Free Massive MIMO. *GLOBECOM 2022 - 2022 IEEE Global Communications Conference, Rio de Janeiro, Brazil*, 2022, 3053-3058